Europäisches Patentamt

European Patent Office

Office européen des brevets

(19)

(11) Veröffentlichungsnummer: **0 370 505 B1**

# (12) EUROPÄISCHE PATENTSCHRIFT

(45) Veröffentlichungstag der Patentschrift:
24.04.91 Patentblatt 91/17

(51) Int. Cl.⁵: **B60B 33/02**

(21) Anmeldenummer: **89121662.4**

(22) Anmeldetag: **23.11.89**

(54) **Laufrolle mit Feststelleinrichtung.**

(30) Priorität: **25.11.88 DE 3839842**

(43) Veröffentlichungstag der Anmeldung:
**30.05.90 Patentblatt 90/22**

(45) Bekanntmachung des Hinweises auf die
Patenterteilung:
**24.04.91 Patentblatt 91/17**

(84) Benannte Vertragsstaaten:
**AT BE CH DE ES FR GB GR IT LI LU NL SE**

(56) Entgegenhaltungen:
**DE-A- 3 618 448
US-A- 4 110 866**

(73) Patentinhaber: **Hülsbeck & Fürst GmbH. & Co.
KG
Steeger Strasse 17
W-5620 Velbert 1 (DE)**

(72) Erfinder: **Kurbjuhn, Wilfried
Elberfelder Strasse 86
W-5608 Radevormwald (DE)**

(74) Vertreter: **Patentanwälte Dr. Solf & Zapf
Schlossbleiche 20 Postfach 13 01 13
W-5600 Wuppertal 1 (DE)**

## Beschreibung

Die Erfindung betrifft eine Laufrolle, insbesondere Lenkrolle, im wesentlichen bestehend aus einem gabelförmigen Rollengehäuse mit einer Gabelbrücke und zwei Gabelarmen, einem zwischen den Gabelarmen drehbeweglich gelagerten Laufrad, insbesondere einem in der Gabelbrücke apparateanschlußseitig gelagerten Drehkranz sowie einer an dem Rollengehäuse gelagerten Feststelleinrichtung mit einem beweglich gelagerten, federbelasteten, etwa tangential zum Umfang des Laufrades angeordneten Feststellhebel und einem beweglich gelagerten, federbelasteten, mit dem Feststellhebel arretierend zusammenwirkenden Lösehebel, wobei der Feststellhebel vorzugsweise durch Fußbetätigung aus einer Losstellung in eine arretierte Feststellung bewegbar ist, in der er mit einem gegen das Laufrad bewegbaren, ein gegen dessen Lauffläche wirkendes Feststellelement aufweisenden, ersten Hebelarm das Laufrad sowie insbesondere mit einem gegen den Drehkranz bewegbaren, mit einer Verzahnung des Drehkranzes zusammenwirkenden, zweiten Hebelarm auch den Drehkranz feststellt, und wobei der Feststellhebel bei Betätigung des Lösehebels durch Aufhebung seiner Arretietierung aufgrund seiner Federbelastung wieder zurück in die Losstellung bewegbar ist.

Eine derartige Lauf- bzw. Lenkrolle ist aus der DE-C 33 44 348 bekannt. Die bei dieser bekannten Lenkrolle vorgesehene Feststelleinrichtung besitzt einen am Rollengehäuse schwenkbeweglich gelagerten, als Fußpedalhebel ausgebildeten Feststellhebel, der einen gegen das Laufrad bewegbaren Bremsnocken trägt und in der Feststellung durch einen Lösehebel blockiert wird. Der Lösehebel ist als ebenfalls am Rollengehäuse schwenkbar gelagerter Winkelhebel ausgebildet, wobei ein Hebelarm eine Betätigungsplatte bildet, während der zweite Hebelarm durch zwei an den Seitenrändern der Betätigungsplatte rechtwinklig abgewinkelte Arme gebildet ist, die Durchbrüche im Rollengehäuse bzw. in der Gabelbrücke sowie im Fußpedalhebel durchgreifen. Jeder dieser Arme besitzt eine stufenförmige Rastkante, die mit dem Fußpedalhebel derart in Wirkverbindung steht, daß jeweils eine Stufe der Rastkanten an einem Rand des jeweiligen Durchbruches des Fußpedalhebels in der Feststellung und zusätzlich auch in einer Zwischenstellung, in der nur der Drehkranz blockiert ist, anliegt, wodurch der Fußpedalhebel jeweils in diesen Stellungen arretiert wird.

Obwohl sich diese bekannte Lenkrolle im wesentlichen gut bewährt hat, ist hierbei einerseits von Nachteil, daß sehr viele Einzelteile mit vielen Lagerstellen erforderlich sind, was zu relativ hohen Herstellungs- und Montagekosten führt. Andererseits ist aufgrund der genau definierten Stellungen, und zwar insbesondere der das Laufrad blockierenden Feststellung, des Fußpedalhebels aufgrund von Durchmessertoleranzen der verwendeten Laufräder, die bis zu ± 3 mm betragen können, sowie aufgrund von unterschiedlichen Eigenschaften, wie Härte und Profilform der Lauffläche bei jeder einzelnen Rolle eine Justage des Bremsnockens erforderlich, der hierzu als verstellbarer Schraubbolzen an dem Feststellhebel gelagert ist.

Weitere bekannte Feststelleinrichtungen für Rollen nutzen das Prinzip von Exzentern oder Kniehebeln, wodurch aber ebenfalls der "Schaltweg" des Feststellhebels genau definiert ist, so daß die Durchmessertoleranzen der Laufräder ohne Justagearbeiten zu Fehlfunktionen, d.h. insbesondere zu einem mangelhaften Feststellen, führen würden.

Der vorliegenden Erfindung liegt daher die Aufgabe zugrunde, eine Laufrolle der eingangs beschriebenen Art zu schaffen, deren Feststelleinrichtung bei einer feststehenden Rolle, d.h. bei einer sogenannten Bockrolle, das Laufrad sowie bei einer um eine vertikale Achse schwenkbaren Lenkrolle das Laufrad und den Drehkranz unabhängig von Raddurchmesser, Durchmessertoleranzen sowie unabhängig von unterschiedlichen Eigenschaften der Rad-Laufflächen auch ohne Justagearbeiten zuverlässig feststellt, dabei aber dennoch konstruktiv einfach aufgebaut und preiswert in der Herstellung ist.

Erfindungsgemäß wird dies durch die Merkmale des Hauptanspruches erreicht. Vorteilhafte Weiterbildungen sind in den Unteransprüchen gekennzeichnet.

Erfindungsgemäß ist demnach der Feststellhebel in praktisch jeder Stellung über seinen Hebelweg hinweg arretierbar, wobei die Arretierung aus jeder Stellung heraus durch Betätigung des Lösehebels auch wieder aufgehoben werden kann. Der Feststellhebel kann dabei vorteilhafterweise mit einem sehr großen Hebelweg ausgeführt werden, so daß die erfindungsgemäße Feststelleinrichtung in einem sehr großen Bereich unabhängig von Durchmesser, Durchmessertoleranzen und Laufflächenausbildung des jeweils verwendeten Laufrades absolut zuverlässig arbeitet, und zwar vorteilhafterweise auch ohne Einstell- bzw. Justagearbeiten.

In einer besonders vorteilhaften Ausführungsform der Erfindung ist die Feststelleinrichtung mittelbar über ein gesondertes Feststellergehäuse an dem Rollengehäuse gelagert, wobei der Feststellhebel und der Lösehebel an dem Feststellergehäuse befestigt sind. Durch diese erfindungsgemäße Maßnahme kann die eine gesonderte Baugruppe bildende Feststelleinrichtung auf einfachste Weise an jedes passende Rollengehäuse montiert werden, wobei durch die Erfindung auch hierbei keinerlei Justagen erforderlich sind.

Anhand der Zeichnung soll im folgenden die Erfindung beispielhaft näher erläutert werden. Dabei zeigt:

Fig. 1 einen Vertikalschnitt durch eine erste Ausführungsform einer erfindungsgemäßen Laufrolle,
Fig. 2 eine Ansicht in Pfeilrichtung II gemäß Fig.
1,
Fig. 3 eine Ansicht in Pfeilrichtung III gemäß Fig.
1 ohne Laufrad,
Fig. 4 eine Draufsicht des Feststellhebels in Pfeilrichtung IV gemäß Fig. 1,
Fig. 5 eine Draufsicht des Lösehebels ebenfalls in
Pfeilrichtung IV, gemäß Fig. 1,
Fig. 6 einen Vertikalschnitt durch eine zweite
Ausführungsform einer erfindungsgemäßen Laufrolle,
Fig. 7 eine Draufsicht des Lösehebels in Pfeilrichtung VII gemäß Fig. 6,
Fig. 8 eine Draufsicht des Feststellhebels in Pfeilrichtung VII gemäß Fig. 6,
Fig. 9 einen Vertikalschnitt durch den Bereich der
Feststelleinrichtung einer dritten Ausführungsform einer erfindungsgemäßen Laufrolle, wobei
Feststell- und Lösehebel einstückig ausgebildet
sind,
Fig. 10 eine Teil-Draufsicht des Feststell-/Lösehebels in Pfeilrichtung X gemäß Fig. 9,
Fig. 11 eine Draufsicht auf den Blechzuschnitt
(Abwicklung) des Feststell-/Lösehebels gemäß
Fig. 9 und 10,

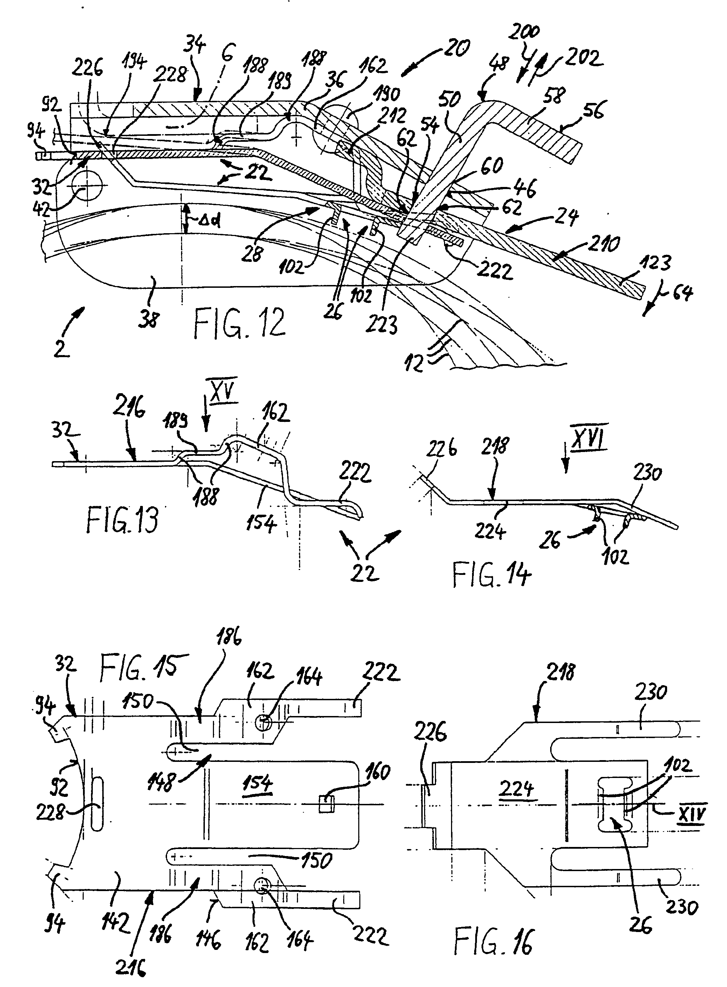

Fig. 12 einen Vertikalschnitt durch den Bereich
der Feststelleinrichtung einer weiteren Ausführungsform der erfindungsgemäßen Laufrolle,

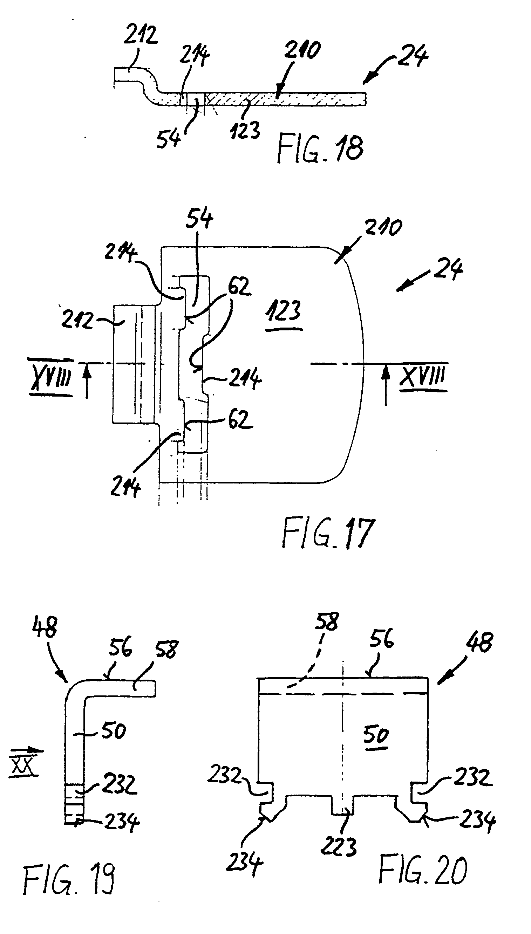

Fig. 13 und 14 gegenüber Fig. 12 verkleinerte
Seitenansichten der zwei Teile des in dieser Ausführung zweiteiligen Feststellhebels (in Fig. 14
teilgeschnitten),
Fig. 15 eine Draufsicht des ersten Teils des Feststellhebels in Pfeilrichtung XV gemäß Fig. 13,
Fig. 16 eine Draufsicht des zweiten Teils des
Feststellhebels in Pfeilrichtung XVI gemäß Fig.
14, wobei die Lage des Teilschnittes von Fig. 14
anhand der Schnittlinie XIV eingezeichnet ist,
Fig. 17 eine gegenüber Fig. 12 verkleinerte Draufsicht des Lösehebels,
Fig. 18 einen Schnitt durch den Lösehebel längs
der Linie XVIII-XVIII in Fig. 17,
Fig. 19 eine gegenüber Fig. 12 verkleinerte Seitenansicht des Arretierelementes,
Fig. 20 eine Ansicht des Arretierelementes in
Pfeilrichtung XX gemäß Fig. 19.

In den verschiedenen Zeichnungsfiguren sind
gleiche bzw. gleichwirkende Teile oder Komponenten
jeweils mit den gleichen Bezugsziffern bezeichnet.

In der Zeichnung ist beispielhaft eine Lenkrolle 2
dargestellt, jedoch läßt sich die Erfindung ohne weiteres auch bei feststehenden, sogenannten Bockrollen verwirklichen. Die Lenkrolle 2 besteht im
wesentlichen aus einem gabelförmigen Rollengehäuse 4 mit einer Gabelbrücke 6 und zwei sich rechtwinklig nach unten daran anschließenden Gabelarmen 8, zwischen denen auf einer Achse 10
ein Laufrad 12 drehbeweglich gelagert ist. In den Fig.
1, 6, 9 und 12 sind jeweils Laufräder 12 mit unterschiedlichen' Durchmessern angedeutet. Bei herkömmlichen Laufrädern können
Durchmessertoleranzen d von bis zu ± 3 mm auftreten, was bisher bei der Feststellung des Laufrades 12
zu den oben bereits beschriebenen Problemen führte.
Diese Probleme werden durch die vorliegenden Erfindung beseitigt, wie dies im folgenden noch erläutert
wird.

Für eine apparateseitige Befestigung besitzt die
Lenkrolle 2 in an sich bekannter Weise einen in der
Gabelbrücke 6 insbesondere über Wälzlager 14 gelagerten Drehkranz 16, der eine Schwenk- bzw. Lenkbewegung der Lenkrolle 2 um eine vertikale Achse 18
ermöglicht.

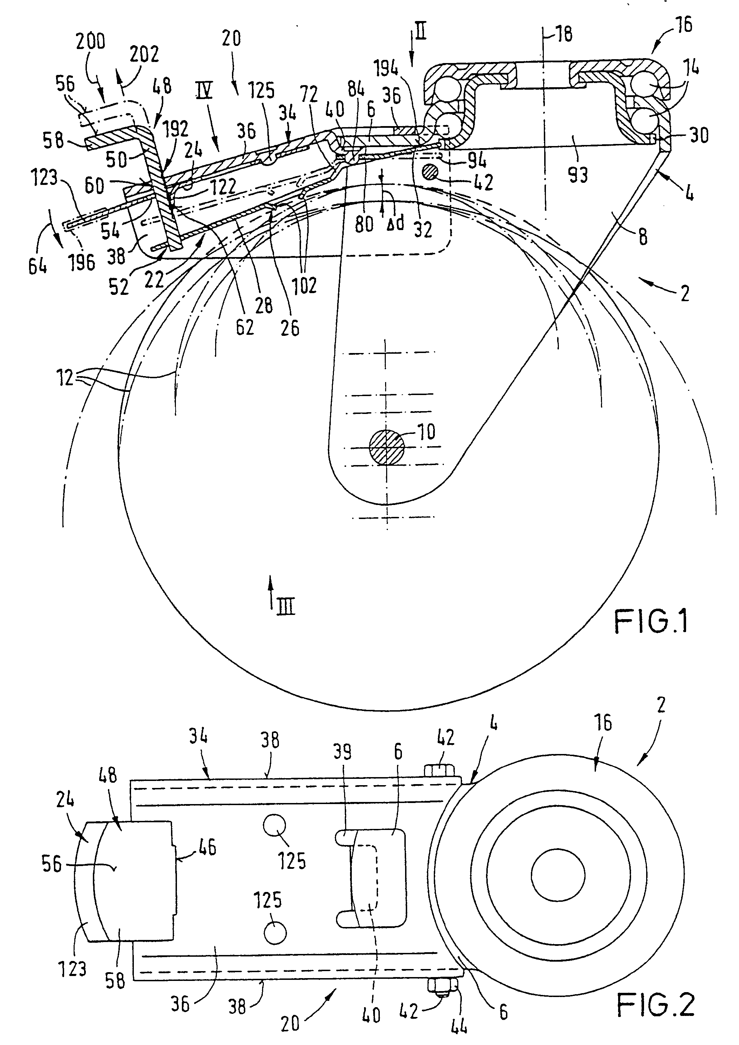

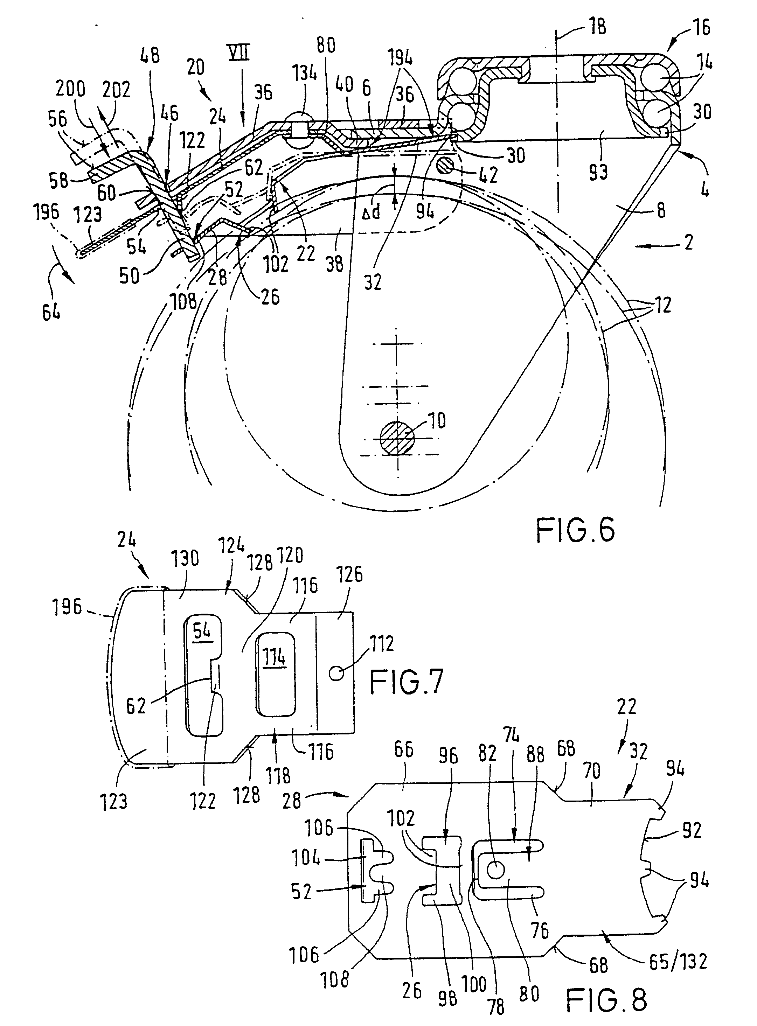

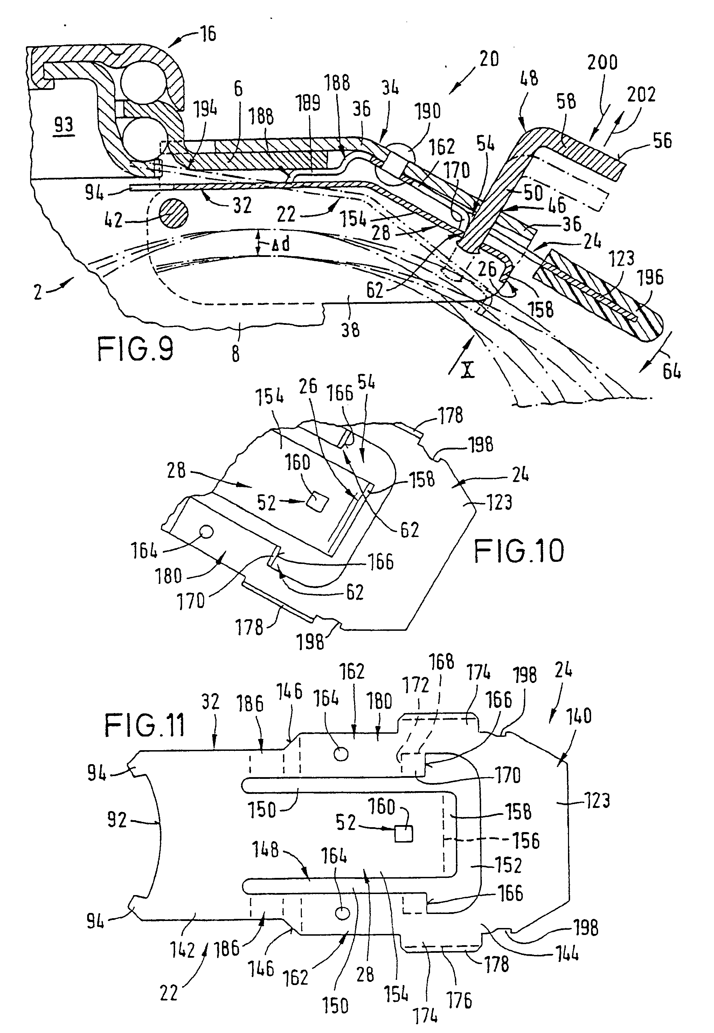

Weiterhin ist an dem Rollengehäuse 4 eine Feststelleinrichtung 20 gelagert, die aus einem schwenkbeweglich gelagerten, federbelasteten, etwa
tangential zum Umfang des Laufrades 12 angeordneten Feststellhebel 22 sowie einem schwenkbeweglich
gelagerten, federbelasteten, mit dem Feststellhebel
22 zum Arretieren sowie Lösen zusammenwirkenden
Lösehebel 24 besteht. Der Feststellhebel 22 ist vorzugsweise durch Fußbetätigung aus einer Losstellung (in Fig. 1 und 6 jeweils gestrichelt sowie in Fig.
9 und 12 voll gezeichnet dargestellt) in eine durch den
Lösehebel 24 arretierte Feststellung (in Fig. 1 und 6
voll und in Fig. 9 gestrichelt gezeichnet) bewegbar, in
der er mit einem gegen das Laufrad 12 bewegbaren,
ein gegen dessen Lauffläche wirkendes Feststellelement 26 aufweisenden, ersten Hebelarm 28 das Laufrad 12 sowie mit einem gegen den Drehkranz 16
bewegbaren, mit einer Verzahnung 30 des Drehkranzes 16 zusammenwirkenden, zweiten Hebelarm 32
auch den Drehkranz 16 feststellt.

Durch Betätigung des Lösehebels 24 wird die
Arretierung des Feststellhebels 22 wieder aufgehoben, so daß dieser sich aufgrund seiner Federbelastung zurück in die Losstellung bewegt.

Die Feststelleinrichtung 20 kann unmittelbar an
dem Rollengehäuse 4 gelagert sein, wobei der Feststellhebel 22 und der Lösehebel 24 vorzugsweise an
der Unterseite der Gabelbrücke 6 befestigt sind.

Bei den dargestellten, bevorzugten Ausführungsformen der Erfindung ist die Feststelleinrichtung 20
jedoch mittelbar über ein gesondertes Feststellergehäuse 34 an dem Rollengehäuse 4 gelagert, wobei
der Feststellhebel 22 und der Lösehebel 24 an dem
Feststellergehäuse 34 befestigt sind. Das Feststellergehäuse 34 ist erfindungsgemäß im wesentlichen U-
förmig aus einer Stegwandung 36 und zwei zu dieser
senkrechten Schenkelwandungen 38 gebildet, wobei
das Feststellergehäuse 34 das Rollengehäuse 4
bereichsweise übergreift. Dabei liegt die Stegwandung 36 bereichsweise auf der Gabelbrücke 6 auf,
und die Schenkelwandungen 38 liegen außen an den Gabelarmen 8 bereichsweise an. Weiterhin besitzt das Feststellergehäuse 34 in den Ausführungen nach Fig. 1 bis 8 erfindungsgemäß eine aus der Stegwandung 36 freigeschnittene oder durch einen U-förmigen Ausschnitt 39 (Fig. 2) freigesparte und aus der Ebene der Stegwandung 36 in Richtung der Schenkelwandungen 38 nach unten herausgebogene, etwa parallel zur Stegwandung 36 unterhalb von dieser angeordnete Haltezunge 40, die die Gabelbrücke 6 des Rollengehäuses 4 untergreift. Die Ausführungsformen nach den Fig. 9 bis 11 sowie nach den Fig. 12 bis 20 unterscheidet sich hiervon etwas in der Art der Halterung des Feststellergehäuses 34, wie dies weiter unten noch erläutert wird. Zur Befestigung der Feststelleinrichtung 20 bzw. des Feststellergehäuses 34 an dem Rollengehäuse 4 besitzen die Gabelarme 8 und die Schenkelwandungen 38 in allen Ausführungen jeweils miteinander fluchtende Durchgangslöcher, durch die sich ein beispielsweise als Schraubbolzen ausgebildeter Befestigungsbolzen 42 hindurch erstreckt und mit einer Mutter 44 verschraubt ist. Alternativ hierzu wäre natürlich auch ein Nietbolzen oder dergleichen verwendbar.

Die Feststelleinrichtung 20 kann dabei in Laufrichtung der Lenkrolle 2 bzw. des Laufrades 12 gesehen alternativ im vor oder hinter der Achse 10 liegenden Bereich angeordnet sein.

In den dargestellten Ausführungsbeispielen der Erfindung verläuft der Lösehebel 24 etwa parallel zu dem ersten Hebelarm 28 des Feststellhebels 22 zwischen diesem und der Gehäuse- bzw. Stegwandung 36. Weiterhin besitzt die Stegwandung 36 in Umfangsrichtung des Laufrades 12 gesehen zwei über einen stumpfen Winkel ineinander übergehende Abschnitte, wodurch sie etwa an die Umfangskontur des Laufrades 12 angepaßt ist (siehe Fig. 1, 6, 9 und 12). Diesem Verlauf ist insbesondere in den Ausführungen gemäß Fig. 6, 9 und 12 auch der Feststellhebel 22 durch eine entsprechend winklige Ausbildung zwischen dem ersten Hebelarm 28 und dem zweiten Hebelarm 32 angepaßt.

Mit dem ersten Hebelarm 28 des Feststellhebels 22 ist erfindungsgemäß ein sich etwa senkrecht zu dem Feststellhebel 22 sowie zu dem Lösehebel 24 von dem Laufrad 12 weg erstreckendes und durch eine Gehäuseöffnung 46 der Gehäuse- bzw. Stegwandung 36 geführtes Arretierelement 48 verbunden, welches in den dargestellten Ausführungsbeispielen der Erfindung jeweils aus einem im wesentlichen L-förmig gebogenen Blechstreifen besteht, wobei ein längerer L-Schenkel 50 endseitig vorzugsweise selbstklemmend in eine Öffnung 52 des Feststellhebels 22 bzw. dessen ersten Hebelarmes 28 eingepreßt (Fig. 1 bis 8) oder mit dem Feststellhebel 22 vernietet (Fig. 9 bis 11) ist, sich durch eine Durchgangsöffnung 54 des Lösehebels 24 sowie die Gehäuseöffnung 46 hindurch erstreckt und oberhalb der Gehäuse- bzw. Stegwandung 36 in einen kürzeren, eine oberseitige Trittfläche 56 aufweisenden L-Schenkel 58 übergeht. Erfindungsgemäß ist weiterhin einerseits zwischen dem längeren Schenkel 50 des Arretierelementes 48 und einem Öffnungsrand 60 der Gehäuseöffnung 46 und andererseits zwischen dem längeren Schenkel 50 des Arretierelementes 48 und einer Anlagekante 62 des Lösehebels 24 jeweils ein Kraft- und/oder Formschluß gegeben, wobei der Lösehebel 24 derart schwenkbeweglich gelagert ist, daß sich bei seiner Betätigungsbewegung in Pfeilrichtung 64 gemäß Fig. 1, 6, 9 und 12 die Anlagekante 62 den Kraft- und/oder Formschluß aufhebend von dem Schenkel 50 des Arretierelementes 48 weg bewegt. Hierdurch wird das Arretierelement 48 zusammen mit dem Feststellhebel 22 freigegeben, so daß sich letzterer aus der Feststellung durch Federkraft wieder in die gestrichelt gezeichnete Losstellung zurückbewegen kann. Vorzugsweise ist – wie dargestellt – die Anlagekante 62 des Lösehebels 24 von einem Öffnungsrand der von dem längeren Schenkel 50 des Arretierelementes 48 durchgegriffenen Durchgangsöffnung 54 des Lösehebels 24 gebildet.

Es ist besonders vorteilhaft, wenn der Feststellhebel 22 und der Lösehebel 24 jeweils aus einstückig ausgestanzten Blattfedern gebildet sind, da sich hierdurch zusätzliche Federelemente erübrigen können.

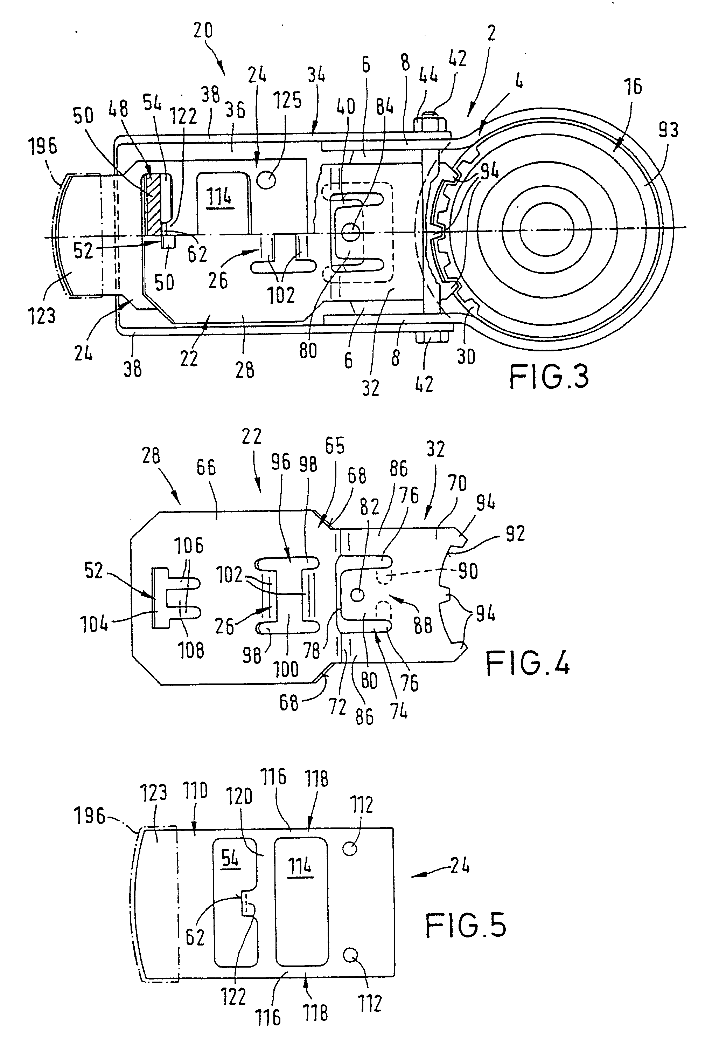

Die im ersten Ausführungsbeispiel nach Fig. 1 bis 3 als Feststellhebel 22 und Lösehebel 24 verwendeten Blattfedern sind im Detail in den Figuren 4 und 5 dargestellt.

Gemäß Fig. 4 besteht der Feststellhebel 22 aus einem einstückigen Stanzteil 65 aus Federblech mit einem den ersten Hebelarm 28 bildenden, im wesentlichen rechteckigen, breiteren Flächenabschnitt 66, der über Schrägkanten 68 in einen schmaleren, den zweiten Hebelarm 32 bildenden Flächenabschnitt 70 übergeht. Im Übergangsbereich zwischen den Schrägkanten 68 und dem schmaleren Flächenabschnitt 70 ist eine Kröpfung 72 (in Fig. 1 erkennbar) derart gebildet, daß im montierten Zustand der erste Hebelarm 28 dem Laufrad 12 näherliegt als der zweite Hebelarm 32. Der schmalere Flächenabschnitt 70 weist einen mittigen, U-förmigen Ausschnitt 74 auf, wobei sich die U-Schenkel 76 dieses Ausschnittes 74 ausgehend von dem im Bereich der Kröpfung 72 liegenden U-Steg 78 in Richtung des freien Endes des zweiten Hebelarmes 32 etwa bis in die Mitte von dessen Länge erstrecken. Durch den Ausschnitt 74 ist eine Befestigungszunge 80 freigespart, die ein etwa mittiges Befestigungsloch 82 aufweist. Diese Befestigungszunge 80 ist z.B. über eine das Befestigungsloch 82 durchgreifende Nietverbindung 84 an der Unterseite der Haltezunge 40 des Feststellergehäuses 34 befestigt (siehe Fig. 1). Durch den U-förmigen Ausschnitt 72 sind weiterhin beidseitig der Befestigungszunge 80 Stege 86 gebildet. Die Befestigungszunge 80 bildet in ihrem zwischen dem Befestigungsloch 82 und ihrem angebundenen Ende liegenden Bereich eine Sollbiegestelle 88 und damit einen Schwenkpunkt für den Feststellhebel 22.

Durch eine zur Betätigung des Feststellhebels 22 durchgeführte Verschwenkung des ersten Hebelabschnittes 28 wird diese Schwenkbewegung über die seitlichen Stege 86 derart auf den zweiten Hebelabschnitt 32 übertragen, daß sich der gesamte Feststellhebel 22 wippenartig durch Verbiegung im Bereich der Sollbiegestelle 88 der Befestigungszunge 80 bewegt, d.h. der erste und zweite Hebelabschnitt 28, 32 bewegen sich stets in unterschiedliche Richtungen. Im Endbereich der U-Schenkel 76 des Ausschnittes 74 können diese – wie in Fig. 4 gestrichelt dargestellt ist – in aufeinanderzu gerichtete, die Zunge 80 im Bereich der Sollbiegestelle 88 verschmalernde Ausschnitte 90 übergehen, wodurch die Federelastizität bzw. Federkraft der Befestigungszunge 80 bzw. der Sollbiegestelle 88 beeinflußt werden kann. Im freien Endbereich weist der zweite Hebelarm 32 bzw. der schmalere Flächenabschnitt 70 des Stanzteils 65 eine an die Umfangskontur der Verzahnung 30 des Drehkranzes 16 angepaßte, kreisbogenförmige Endkante 92 mit vorzugsweise drei in Umfangsrichtung des Drehkranzes 16 beabstandeten, in der Feststellung in die am Außenumfang einer Kugelhülse 93 des Drehkranzes 16 gebildete Verzahnung 30 eingreifende Arretiernocken 94 auf.

Der breitere Flächenabschnitt 66 des Stanzteils 65 besitzt in seinem dem schmaleren Flächenabschnitt 70 zugekehrten Bereich einen etwa H-förmigen Ausschnitt 96 mit zwei parallelen, in Längsrichtung des Feststellhebels 22 verlaufenden Abschnitten 98 und einem diese im jeweils mittigen Bereich miteinander verbindenden, quer verlaufenden Abschnitt 100. Hierdurch sind zwei in Umfangsrichtung des Laufrades 12 gegenüberliegende, in Richtung der Lauffläche des Laufrades 12 schräg nach unten abgebogene, das Feststellelement 26 bildende Feststellzungen 102 gebildet (siehe auch Fig. 1).

Weiterhin weist der breitere Flächenabschnitt 66 des Stanzteils 65 in seinem freien Endbereich die Öffnung 52 auf, die hier als ein sich quer zur Hebel-Längsrichtung erstrekkender, rechteckiger Ausschnitt 104 ausgebildet ist, der in zwei parallele, sich in Richtung des schmaleren Flächenabschnittes 70 erstreckende Ausschnitte 106 übergeht, wobei diese beiden Ausschnitte 106 zwischen sich eine Klemmzunge 108 bilden. Dabei ist es wesentlich, daß diese Klemmzunge 108 eine derartige Länge aufweist, daß sie etwas in die Öffnung des rechteckiges Ausschnittes 104 hineinragt. Der rechteckige Ausschnitt 104 entspricht formmäßig etwa dem Querschnitt des längeren L-Schenkels 50 des Arretierelementes 48. Durch diese Ausbildung bewirkt ein Hineindrücken des Endes des L-Schenkels 50 in den rechteckigen Ausschnitt 104 eine selbstklemmende Halterung über die sich leicht federelastisch verbiegende Klemmzunge 108 (siehe hierzu auch Fig. 6).

Gemäß Fig. 5 besteht der Lösehebel 24 ebenfalls aus einem einstückigen Federblech-Stanzteil 110, welches in diesem Beispiel eine im wesentlichen rechteckige Form besitzt. Im Bereich eines Endes weist das Stanzteil 110 zwei Befestigungslöcher 112 in bezüglich der Längsmittelachse symmetrischer Anordnung auf. Ein Stück von den Befestigungslöchern 112 in Richtung des anderen Endes beabstandet ist ein rechteckiger Ausschnitt 114 angeordnet, wodurch zwei seitliche Randstege 116 gebildet sind, die eine Sollbiegestelle 118 und damit einen Schwenkpunkt für den Lösehebel 24 definieren. Über unterschiedliche Breiten der Stege 116 läßt sich dabei die Federelastizität bzw. die Federkraft beeinflussen.

Das Stanzteil 110 weist weiterhin die durch einen rechteckigen Ausschnitt gebildete Durchgangsöffnung 54 auf, wobei an einem den Ausschnitt 114 von der Durchgangsöffnung 54 trennenden Quersteg 120 eine in die Durchgangsöffnung 54 hineinragende, widerhakenartig schräg etwa in Richtung des Befestigungsbereiches zwischen dem Feststellhebel 22 und dem Ende des längeren Schenkels 50 des Arretierelementes 48 abgebogene Arretierzunge 122 angebunden ist (siehe auch Fig. 1). Am freien Ende der Arretierzunge 122 ist die oben bereits erwähnte Anlagekante 62 gebildet, deren Funktion im folgenden noch erläutert werden wird. Das von den Befestigungslöchern 112 entfernte Ende des Stanzteils 110 bildet einen flachen, endseitig leicht abgerundeten Betätigungsabschnitt 123.

Der in Fig. 5 dargestellte Lösehebel 24 ist gemäß Fig. 1 bis 3 über zwei die Befestigungslöcher 112 durchgreifende Nietverbindungen 125 an der Unterseite der Stegwandung 36 des Feststellergehäuses 34 befestigt. Unabhängig von dieser Befestigung ist – wie oben bereits erwähnt – der in Fig. 4 dargestellte Feststellhebel 22 gemäß Fig. 1 und 3 gesondert über die einzelne Nietverbindung 84 mit der Befestigungszunge 80 an der Unterseite der Haltezunge 40 des Festellergehäuses 34 befestigt. Anstatt der beschriebenen und dargestellten Nietverbindungen sind natürlich ebenfalls beliebige andere Verbindungsmittel oder Verbindungsarten möglich, ohne den Rahmen der Erfindung zu verlassen. Es seien hier beispielsweise Schraubverbindungen und stoffschlüssige Verbindungen (Kleben) genannt.

Die im zweiten Ausführungsbeispiel nach Fig. 6 als Feststellhebel 22 und Lösehebel 24 verwendeten Blattfedern sind in den Fig. 7 und 8 dargestellt. Diese Blattfedern unterscheiden sich von denjenigen der Fig. 4 und 5 jedoch nur unwesentlich, so daß im folgenden nur kurz auf die Unterschiede eingegangen werden soll. Darüber hinaus sind hier gleiche Teile mit den gleichen Bezugsziffern der übrigen Figuren versehen, so daß auch jeweils auf die obigen Ausführungen hierzu verwiesen werden kann.

Gemäß Fig. 7 besteht hier der Lösehebel 24 aus einem einstückigen Federblech-Stanzteil 124 mit einem schmaleren Abschnitt 126, der über Schrägkanten 128 in einen breiteren, das freie Ende des Lösehebels 24 bildenden Abschnitt 130 übergeht. Im Endbereich des schmaleren Abschnittes 126 ist im Gegensatz zur Ausführung nach Fig. 5 nur ein mittig angeordnetes Befestigungsloch 112 gebildet. Ansonsten wird auf die Ausführungen zu Fig. 5 verwiesen.

Der in Fig. 8 dargestellte, aus einem einstückigen Federblech-Stanzteil 132 bestehende Feststellhebel entspricht in seiner Ausbildung im wesentlichen dem Stanzteil 65 gemäß Fig. 4, wobei er aber – wie in Fig. 6 erkennbar ist – über Biegungen noch mehr der Umfangskontur des Laufrades 12 angepaßt ist.

In der Ausführung nach Fig. 6 sind der Lösehebel 24 (Fig. 7) und der Feststellhebel 22 (Fig. 8) vorteilhafterweise gehäuseseitig über eine gemeinsame, die Befestigungslöcher 82 und 112 durchgreifende Nietverbindung 134 befestigt, wozu in diesem Fall in einem neben bzw. hinter der Haltezunge 40 liegenden Bereich der Stegwandung 36 des Feststellergehäuses 34 ein entsprechendes Befestigungsloch (nicht bezeichnet) angeordnet ist. Anstatt der Nietverbindung kann natürlich auch hier eine beliebige andere Verbindungsart gewählt werden (Schrauben, stoffschlüssige Verbindung usw.).

In der in den Fig. 9 bis 11 dargestellten, besonders vorteilhaften Weiterbildung der Erfindung sind der Feststellhebel 22 und der Lösehebel 24 gemeinsam von einer einzigen, einstückigen Blattfeder gebildet. Diese Blattfeder besteht aus einem in Fig. 11 als "Abwicklung" dargestellten, einstückigen Federblech-Stanzteil 140, das einendig einen schmaleren Endabschnitt 142 und anderendig einen breiteren Endabschnitt 144 aufweist, wobei diese beiden Abschnitte 142, 144 über Schrägkanten 146 ineinander übergehen. Der schmalere Endabschnitt 142 bildet den zweiten Hebelarm 32 des Feststellhebels 22 und weist daher die oben bereits beschriebene, kreisbogenförmige Endkante 92 mit den an dieser angebundenen Arretiernocken 94 auf, wobei allerdings in diesem Beispiel nur zwei Arretiernocken 94 vorgesehen sind. Das dem schmaleren Endabschnitt 142 abgekehrte, freie Ende des breiteren Endabschnittes 144 bildet den Betätigungsabschnitt 123 des Lösehebels 24. Das Stanzteil 140 besitzt etwa in seinem mittigen Bereich einen im wesentlichen U-förmigen Ausschnitt 148 mit zwei zueinander parallelen, zur Hebel-Längsachse symmetrischen, sich von dem Betätigungsabschnitt 123 aus bis über den Bereich der Schrägkanten 146 hinaus ein Stück in den Bereich des schmaleren Endabschnittes 142 hinein erstreckenden Schenkelausschnitten 150, die auf der Seite des Betätigungsabschnittes 123 über einen senkrecht zur Hebel-Längsachse angeordneten Verbindungsausschnitt 142 ineinander übergehen. Durch den U-förmigen Ausschnitt 148 ist somit eine den ersten Hebelarm 28 des Feststellhebels 22 bildende Federzunge 154 freigeschnitten, die in ihrem freien Endbereich einen um eine Biegelinie 156 in Richtung des Laufrades 12 umgebogenen Steg 158 aufweist, der in diesem Ausführungsbeispiel das Feststellelement 26 des Feststellhebels 22 bildet (siehe hierzu auch Fig. 9 und 10). Weiterhin besitzt die Federzunge 154 in ihrem sich an den Steg 158 anschließenden Endbereich die im dargestellten Beispiel als quadratische Befestigungsöffnung 160 ausgebildete Öffnung 52 zum Befestigen (Vernieten) des längeren L-Schenkels 50 des Arretierelementes 48.

Durch den U-förmigen Ausschnitt 148 sind weiterhin zwei seitliche Randstege 162 gebildet, über die der Feststellhebel 22 mit dem Lösehebel 24 einstückig verbunden ist. Etwa in seinem mittigen Bereich besitzt jeder der Randstege 162 ein Befestigungsloch 164, wobei die Befestigungslöcher 164 die Grenze zwischen dem Lösehebel 24 und dem Feststellhebel 22 definieren.

Durch den U-förmigen Ausschnitt 148 ist auch der Lösehebel 24 im wesentlichen U-förmig aus Abschnitten der Randstege 162 und dem diese verbindenden Betätigungsabschnitt 123 ausgebildet. Die Schenkelausschnitte 150 des U-förmigen Ausschnittes 148 erweitern sich im Bereich des Lösehebels 24 kurz vor dem Übergang zu dem Verbindungsausschnitt 152 über nach außen verspringende Stufenkanten 166. Ausgehend von den äußeren Enden der Stufenkanten 166 sind aus den Randstegen 162 durch in Fig. 11 gestrichelt dargestellte, sich in Hebel-Längsrichtung erstreckende Einschnitte 168 zwei Arretierzungen 170 freigeschnitten, die um ebenfalls gestrichelt eingezeichnete Biegelinien 172 abgebogen sind (analog zu der Arretierzunge 122 der Ausführungsbeispiele nach Fig. 1 bis 8). Die nach dem Umbiegen an den freien Enden der Arretierzungen 170 angeordneten Stufenkanten 166 bilden hinsichtlich ihrer Wirkung die – hier zweigeteilte – Anlagekante 62 (vgl. die Ausführungsbeispiele nach Fig. 1 bis 8).

In einem die Arretierzungen 170, die Erweiterung der Schenkelausschnitte 150 und den Verbindungsausschnitt 152 in Hebel-Längsrichtung überdeckenden Bereich besitzt der breitere Endabschnitt 144 des Stanzteils 140 beidseitig jeweils einen randlichen Stegansatz 174 mit einem um eine in Fig. 11 gestrichelt eingezeichnete Biegelinie 176 etwa rechtwinklig umgebogenen Versteifungssteg 178 (siehe auch Fig. 10). Aufgrund dieser Versteifungsstege 178 ist im zwischen diesen und den Befestigungslöchern 164 liegenden Bereich der Randstege 162 jeweils eine Sollbiegestelle 180 und damit ein Schwenkpunkt für den Lösehebel 24 gebildet, wobei in jedem Fall aufgrund der Versteifungsstege 178 sichergestellt ist, daß bei Verschwenkung des Lösehebels 24 über einen Druck auf den Betätigungsabschnitt 123 auch die Arretierzungen 170 "mitgenommen" werden, was für die Funktion der erfindungsgemäßen Feststelleinrichtung von Wichtigkeit ist, wie dies nachfolgend noch erläutert wird.

In den dem Lösehebel 24 abgekehrten Bereichen der Randstege 162 sind diese über die Schrägkanten 146 jeweils in einen dem Befestigungsloch 164 zugekehrten, breiteren Abschnitt 182 und einen dem Befestigungsloch 164 abgekehrten, schmaleren Abschnitt 184 unterteilt, wobei in den schmaleren Abschnitten 184 jeweils eine Sollbiegestelle 186 und damit ein Schwenkpunkt für den Feststellhebel 22 gebildet ist, um den sich dieser – ebenso wie bei den bereits beschriebenen Ausführungen – wippenartig bewegen kann. Die Abschnitte 182 und 184 der Randstege 162 gehen über derartige Verkröpfungen 188 ineinander über, daß der erste Hebelarm 28 des Feststellhebels 22 in einer Ebene "unterhalb" des Lösehebels 24 angeordnet ist (siehe Fig. 11). Dabei verläuft jeweils ein zwischen zwei Verkröpfungen 188 liegender Abschnitt 189 der Randstege 162 parallel zu der Stegwandung 36 des Feststellergehäuses 34 in einem Abstand von der Stegwandung 36, der etwa der Dicke des Materials der Gabelbrücke 6 entspricht. Zur Halterung des Feststellergehäuses 34 an dem Rollengehäuse 4 untergreifen diese Abschnitte 189 der Randstege 162 die Gabelbrücke 6 etwa analog zu der Haltezunge 40 der Ausführungsbeispiele nach Fig. 1 bis 8. Diese Haltezunge 40 kann sich daher in diesem Ausführungsbeispiel nach Fig. 9 bis 11 vorteilhafterweise erübrigen.

Zur Befestigung des mit dem Lösehebel 24 einstückigen Feststellhebels 22 werden die auf der Unterseite der Stegwandung 36 des Festellergehäuses 34 aufliegenden Randstege 162 im Bereich der Befestigungslöcher 164 mit der Stegwandung 36 vernietet (siehe die Nietverbindung 190 in Fig. 9), oder aber auf andere geeignete Art befestigt (Kleben, Verschrauben).

Die in den Fig. 12 bis 20 veranschaulichte Ausführungsform der Erfindung entspricht im wesentlichen den bisher beschriebenen Ausführungen, so daß auch hier wiederum gleiche bzw. gleichwirkende Teile die gleichen Bezugsziffern tragen. Es kann hierzu auf die obigen Ausführungen verwiesen werden. Im folgenden sollen nun insbesondere die Unterschiede erläutert werden. In dieser Ausführung besteht der Lösehebel 24 vorteilhafterweise aus einem – im Gegensatz zu den bisher beschriebenen Blattfeder-Stanzteilen – formstabilen Blechteil 210 (siehe auch Fig. 17 und 18), welches "schwimmend" zwischen der Stegwandung 36 und dem Feststellhebel 22 gelagert ist. Hierzu besteht das Blechteil 210 aus dem im wesentlichen etwa rechteckigen Betätigungsabschnitt 123 und einer in Richtung der Stegwandung 36 nach oben abgekröpften Lagerzunge 212, die sich – ein Kipp- oder Schwenklager bildend

– an der Unterseite der Stegwandung 36 abstützt (siehe Fig. 12). Dabei erstreckt sich auch hier das Arretierelement 48 (in den Fig. 19 und 20 dargestellt) mit dem längeren L-Schenkel 50 durch die Durchgangsöffnung 54 des Lösehebels 24 hindurch, wobei gemäß Fig. 17 das Blechteil 210 nach innen in die Durchgangsöffnung 54 ragende Klemmansätze 214 mit in diesem Fall jeweils einer Anlagekante 62 aufweist, die den beschriebenen Kraftschluß zwischen dem Lösehebel 24 und dem Arretierelement 48 verstärken, indem bei verschwenktem bzw. gekipptem Lösehebel 24 das Arretierelement 8 zwischen den gegenüberliegenden Anlagekanten 62 klemmend gehalten wird. Die Halterung des den Lösehebel 24 bildenden Blechteils 210 erfolgt hier somit ausschließlich durch das sich durch die Durchgangsöffnung 54 erstreckende Arretierelement 48.

Weiterhin ist in dieser Ausführung der Feststellhebel 22 vorzugsweise zweiteilig aus zwei Blattfeder-Stanzteilen gebildet, und zwar einem den zweiten Hebelarm 32 mit den Arretiernocken 94 aufweisenden, ersten Stanzteil 216 (siehe auch Fig. 13 und 15) und einem den ersten Hebelarm 28 mit dem Feststellelement 26 bzw. den Feststellzungen 102 bildenden, zweiten Stanzteil 218 (siehe auch Fig. 14 und 16). Hierbei entspricht das erste Stanzteil 216 im wesentlichen dem Stanzteil 140 der Ausführung nach Fig. 9 bis 11, so daß hier auf die obigen Erläuterungen verwiesen werden kann. Unterschiedlich ist hier lediglich, daß einerseits die Federzunge 154 ausschließlich der federelastischen Abstützung des Arretierelementes 48 und damit der Verschwenkung des zweiten Hebelarms 32 um die Sollbiegestellen 186 dient, so daß hier der das Feststellelement 26 bildende Steg 158 der Federzunge 154 entfallen kann. Andererseits gehen hier die Randstege 162 einstückig in zwei seitliche Federzungen 222 über, auf denen sich der Lösehebel 24 bzw. das Blechteil 210 federelastisch abstützt. Hierzu liegen die Federzungen 222 endseitig jeweils im Bereich neben der Durchgangsöffnung 54 unter elastischer Vorspannung an dem Betätigungsabschnitt 123 des Blechteils 210 an. Die Federzunge 154 weist auch hier die Befestigungsöffnung 160 für das Arretierelement 48 auf, allerdings ist hier keine Vernietung zwischen dem Arretierelement 48 und der Federzunge 154 vorgesehen, sondern das Arretierelement 48 erstreckt sich mit einem mittigen, im Querschnitt vorzugsweise quadratischen Lagerzapfen 223 des längeren L-Schenkels 50 (siehe Fig. 20) mit geringem Umfangsspiel in die Befestigungsöffnung 160 hinein, wodurch geringfügige Bewegungen zwischen der Federzunge 154 und dem Arretierelement 48 möglich sind, was die Klemmwirkung zwischen dem Lösehebel 24 und dem Arretierelement 48 vorteilhafterweise günstig beeinflußt.

Das zweite Stanzteil 218 ist erfindungsgemäß lösbar an dem ersten Stanzteil 216 gehaltert, und zwar auf dessen dem Laufrad 12 zugekehrter Seite. Hierzu besitzt das zweite Stanzteil 218 an einer Schmalseite eines rechteckigen Hauptteils 224 eine im stumpfen Winkel nach oben, in Richtung des ersten Stanzteils 216 abgebogene Haltezunge 226 (Fig. 14 und 16), die in eine im sich an die Endkante 92 anschließenden Bereich gebildete Schlitzöffnung 228 des ersten Stanzteils 216 (siehe Fig. 15) kraft- und/oder formschlüssig eingreift, wie dies gut in Fig. 12 zu erkennen ist. Ferner besitzt das zweite Stanzteil 218 zwei seitliche, zueinander parallele, etwa im mittleren Bereich des Hauptteils 224 an dessen Längskanten einstückig angeformte, von der Haltezunge 226 weg weisende Haltestege 230, die im montierten Zustand in seitliche Ausnehmungen 232 (siehe Fig. 20) im Endbereich des längeren Schenkels 50 des Arretierelementes 48 eingreifen. Hierdurch haltern sich das Arretierelement 48 und das zweite Stanzteil 218 vorteilhafterweise praktisch gegenseitig, denn ein "Herausrutschen" des Arretierelementes 48 nach oben wird erfindungsgemäß durch die in die Ausnehmungen 232 eingreifenden Haltestege 230 verhindert. Der der Haltezunge 226 gegenüberliegende Bereich des Hauptteils 224 des zweiten Stanzteils 218 bildet den ersten Hebelarm 28 des Feststellhebels 22 und weist daher das wiederum durch freigesparte und abgebogene Feststellzungen 102 gebildete Feststellelement 26 auf. Da das zweite Stanzteil 218 in diesem Bereich an der Federzunge 154 des ersten Stanzteils 216 anliegt (in Fig. 12 zu erkennen), ist das Feststellelement 26 zum Feststellen des Laufrades 12 in einer zu diesem etwa radialen Richtung mittels des Arretierelementes 48 bewegbar.

Wie in Fig. 20 weiterhin zu erkennen ist, besitzt das Arretierelement 48 am freien Ende des längeren Schenkels 50 zwei seitliche Schrägflächen 234, deren Funktion im folgenden noch erläutert werden wird.

Bei der Ausführungsform der Fig. 12 bis 20 erfolgt nun die Montage der Feststelleinrichtung 20 wie folgt. Das erste Stanzteil 216 wird über die Nietverbindungen 190 an der Unterseite der Stegwandung 36 befestigt. Nachfolgend wird der Lösehebel 24 bzw. das Blechteil 210 mit der Lagerzunge 212 voraus zwischen die Stegwandung 36 und die Federzunge 154 der ersten Stanzteils 216 geführt, bis die Durchgangsöffnung 54 etwa mit der Öffnung 46 der Stegwandung 36 fluchtet, so daß dann das Arretierelement 48 mit seinem längeren Schenkel 50 durch die beiden Öffnungen hindurch gesteckt werden kann. Dabei greift der Lagerzapfen 223 in die Befestigungsöffnung 160 der Federzunge 154 ein. Schließlich erfolgt die Montage des zweiten Stanzteils 218, indem dieses zunächst mit der Haltezunge 226 in die Schlitzöffnung 228 des ersten Stanzteils 216 eingesteckt wird. Nachfolgend wird das gegenüberliegende Ende des Stanzteils 218 in Richtung des ersten Stanzteils 216 bewegt, bis die seitlichen Haltestege 230 auf die Schrägflächen 234 des längeren Schenkels 50 des Arretierelementes 48 auftreffen und hierdurch federelastisch nach außen gedrängt werden, bis sie in die seitlichen Ausnehmungen 232 einschnappen. Eine Demontage ist vorteilhafterweise ebenso leicht in umgekehrter Reihenfolge möglich.

Im folgenden sollen nun die Wirkungsweise sowie weitere vorteilhafte Merkmale der erfindungsgemäßen Feststelleinrichtung 20 erläutert werden.

Die Arretierzunge 122 des Lösehebels 24 wirkt mit ihrer Anlagekante 62 im Ausführungsbeispiel nach Fig. 6 kraftschlüssig, d.h. reibend, mit der Oberfläche des längeren Schenkels 50 des Arretierelementes 48 zusammen. In der Ausführung nach Fig. 1 bis 5 weist das Arretierelement 48 erfindungsgemäß auf der der Anlagekante 62 des Lösehebels 24 zugekehrten Oberfläche des längeren L-Schenkels 50 eine Kerbverzahnung 192 auf, in die die Anlagekante 62 der Arretierzunge 122 des Lösehebels 24 form- oder kraftformschlüssig eingreift. Schließlich wirken auch einerseits in der Ausführung nach Fig. 9 bis 11 die die Anlagekante 62 bildenden Stufenkanten 166 der Arretierzungen 170 sowie andererseits in der Ausführung nach Fig. 12 bis 20 die Anlagekanten 62 der Klemmansätze 214 des den Lösehebel 24 bildenden Blechteils 210 jeweils kraftschlüssig, d.h. reibend mit dem Arretierelement 48 zusammen.

In allen Fällen ist in der Feststellung zwischen dem Arretierelement 48 bzw. dessen L-Schenkel 50 und dem auf der der Anlagekante 62 abgekehrten Seite des Arretierelementes 48 an diesem anliegenden Öffnungsrand 60 der Gehäuseöffnung 46 ein Kraftschluß (Reibung) vorhanden. Dies resultiert daraus, daß der L-Schenkel 50 des Arretierelementes 48 erfindungsgemäß in zwei Punkten exakt geführt ist, nämlich einerseits durch die Verbindung mit dem ersten Hebelarm 28 des Feststellhebels 22 und andererseits durch die Gehäuseöffnung 46. Hierdurch kann der Lösehebel 24 mit der Anlagekante 62 unter Vorspannung gegen den Schenkel 50 des Arretierelementes 48 "drücken", ohne daß letzterer ausweichen könnte. Diese Vorspannung bzw. Anlagekraft des Lösehebels 24 über die Anlagekante 62 wird dabei vorteilhafterweise noch erhöht, je weiter der erste Hebelarm 28 "gespannt", d.h. in die Feststellung gebracht wird, denn bei der Verschwenkung des Hebelarms 28 bewegt sich das mit ihm verbundene Arretierelement 48 in Richtung der Anlagekante 62, weil sich ja das freie Ende des Hebelarmes 28 auf einer Kreisbahn um dessen Schwenkpunkt (Sollbiegestelle 88 bzw. 186) bewegt.

Durch die erfindungsgemäße Ausgestaltung ist der Feststellhebel 22 über das Arretierelement 48 vorteilhafterweise in nahezu jeder Stellung über seinen Hebelweg hinweg arretierbar, so daß stets auch bei unterschiedlichen Laufrädern 12 eine Feststellung erreicht werden kann, in der das Laufrad 12 sicher festgestellt ist.

In allen Ausführungsbeispielen liegt der zweite Hebelarm 32 des Feststellhebels 22 in seiner den Drehkranz 16 arretierenden Feststellung vorzugsweise an einem gehäuseseitigen Anschlag 194 an (siehe Fig. 1, 6, 9 und 12). Dieser Anschlag 194 kann durch die unterseitige(n) Oberfläche(n) der Gabelbrücke 6 des Rollengehäuses 4 (Fig. 1, 9 und 12) und/oder der Haltezunge 40 des Feststellergehäuses 34 (Fig. 6) gebildet sein. Diese Ausgestaltung ist insofern von Vorteil, als – sobald der Drehkranz 16 von einer bestimmten Stellung des Feststellhebels 22 bzw. des Arretierelementes 48 ab arretiert ist – nachfolgend der erste Hebelarm 28 des Feststellhebels 22 zur sicheren Feststellung des Laufrades 12 weitergehend "nachgespannt" werden kann, ohne die Feststellung des Drehkranzes 16 zu beeinflussen, da bei einem derartigen "Nachspannen" der zweite Hebelarm aufgrund der Federelastizität in Anlage an dem Anschlag 194 und damit in der den Drehkranz 16 feststellenden Stellung bleibt.

Die das Feststellelement 26 bildenden Feststellzungen 102 (Fig. 1 bis 8 sowie Fig. 12 bis 20) bzw. der Steg 158 (Fig. 9 bis 11) kommen in der Feststellung jeweils mit ihren freien Endkanten zur Auflage auf der Lauffläche des Laufrades 12. Hierdurch ist auch unabhängig von einer etwaigen Profilierung des Laufrades 12 eine sichere Feststellung stets gewährleistet.

Der Lösehebel 24 erstreckt sich vorzugsweise mit dem Betätigungsabschnitt 123 über den Feststellhebel 22 sowie auch über den kürzeren L-Schenkel 58 des Arretierelementes 48 hinaus nach vorne, wobei an dem Betätigungsabschnitt 123 zweckmäßigerweise ein kappenartiger Überzug 196, der nur in Fig. 1, 3, 5, 6 und 7 jeweils gestrichelt angedeutet sowie in Fig. 9 geschnitten dargestellt ist, befestigt ist. Dieser Überzug 196 kann beispielsweise durch eine Kunststoffbeschichtung gebildet sein. Durch seitliche Ausnehmungen 198 des Betätigungsabschnittes 123, wie sie in Fig. 10 und 11 beispielhaft dargestellt sind, sowie ggf. durch Ausnehmungen im Flächenbereich des Betätigungsabschnittes 123 (nicht dargestellt) kann ein Formschluß und damit eine gute Halterung des Überzuges 196 erreicht werden.

Bei der Ausführung nach Fig. 12 bis 20 ist von besonderem Vorteil, daß der Lösehebel 24 durch die Ausbildung als formstabiles Blechteil eine im Vergleich zu den Blattfedern erhöhte Stabilität besitzt, so daß ein Lösen aus der Feststellung heraus vorteilhafterweise auch gegen sehr hohe Klemmkräfte problemlos möglich ist.

In einer in der Zeichnung nicht dargestellten Weiterbildung der Erfindung ist die Feststelleinrichtung 20 mit einer insbesondere akustischen Signaleinrichtung ausgestattet, die bei einer bestimmten Mindest-Feststellkraft ein akustisches Signal, z.B. ein Knackgeräusch, erzeugt. Der Benutzer der erfindungsgemäßen Laufrolle erhält hierdurch stets eine Information, ob das Laufrad 12 auch tatsächlich hinreichend festgestellt ist.

Im folgenden soll noch einmal kurz zusammengefaßt die Funktion der erfindungsgemäßen Laufrolle hinsichtlich der Feststelleinrichtung erläutert werden. Aus der Losstellung heraus wird der Feststellhebel 22 durch Fußbetätigung des Arretierelementes 48, d.h. durch Druck in Pfeilrichtung 200 auf die Trittfläche 56 des L-Schenkels 58, in die Feststellung verschwenkt, in der der erste Hebelarm 28 mit dem Feststellelement 26, d.h. den Feststellzungen 102 bzw. dem Steg 158, auf der Lauffläche des Laufrades 12 aufliegt und der zweite Hebelarm 32 mit den Arretiernocken 94 in die Verzahnung 30 des Drehkranzes 16 eingreift. Dabei bewirkt der mit der Anlagekante 62 kraft- und/oder formschlüssig an dem Schenkel 50 des Arretierelementes 48 anliegende Lösehebel 24 auch einen Kraftschluß zwischen dem Arretierelement 48 und dem Öffnungsrand 60 der Gehäuseöffnung 46 und damit eine Arretierung des Feststellhebels 22 über das Arretierelement 48. Zum Lösen dieser Arretierung braucht lediglich der Lösehebel 24 in Pfeilrichtung 64 verschwenkt zu werden, was vorteilhafterweise ebenfalls durch Fußbetätigung erfolgen kann, wobei diese Schwenkbewegung bewirkt, daß sich die Anlagekante 62 des Lösehebels 24 von dem Arretierelement 48 weg bewegt, so daß auch der Kraftschluß zwischen dem Arretierelement 48 und dem Öffnungsrand 60 aufgehoben wird. Der Feststellhebel 22 kann sich hierdurch aufgrund seiner Federelastizität wieder in die Losstellung zurückbewegen, wobei der L-Schenkel 50 des Arretierelementes 48 sich frei durch die Durchgangsöffnung 54 des Lösehebels 24 sowie durch die Gehäuseöffnung 46 hindurch in Pfeilrichtung 202 nach oben bewegen kann.

Aufgrund der beschriebenen, erfindungsgemäßen Ausgestaltung ist die Lauf- bzw. Lenkrolle 2 der Erfindung vorteilhafterweise konstruktiv äußerst einfach aufgebaut und dadurch auch preiswert herzustellen und zu montieren. Dabei sind insbesondere aufgrund der Ausbildung des Feststellhebels 22 und des Lösehebels 24 jeweils als einteilige bzw. als gemeinsam einteilige Blattfeder(n) keinerlei Lagerstellen erforderlich, sondern die Schwenkbeweglichkeit dieser Hebel wird allein durch ihre Federelastizität in den Sollbiegestellen erreicht.

Die Erfindung ist keineswegs auf die beschriebenen und dargestellten Ausführungsbeispiele beschränkt, sondern umfaßt auch alle im Sinne der Erfindung gleichwirkenden Ausführungsformen, soweit sie in den Ansprüchen definiert sind. Insbesondere soll noch einmal darauf hingewiesen werden, daß die Feststelleinrichtung 20 auch unmittelbar an dem Rollengehäuse 4 gelagert sein kann, wobei der Feststellhebel 22 und der Lösehebel 24 in diesem Fall an dem Rollengehäuse 4 befestigt wären und die Gehäuseöffnung 46 in der Gabelbrücke 6 gebildet wäre. Ferner kann das Feststellelement 26 anstelle der zungenartigen Ausgestaltung auch jede beliebige andere, z.B. ballige Form aufweisen oder auch als ggf. separater "Feststellschuh" ausgebildet sein. Weiterhin kann die in den Patentansprüchen definierte Erfindung ohne weiteres auch bei solchen Laufrollen angewendet werden, bei denen die Feststelleinrichtung ausschließlich als Richtungsfeststeller zum Feststellen des Drehkranzes ausgebildet ist. Hierzu entfällt lediglich das Feststellelement 26 (Feststellzungen 102, Steg 158) des ersten Hebelarmes 28 des Feststellhebels 22, und gegebenenfalls wird eine andere Verzahnung 30 am Drehkranz 16 in Verbindung mit einer modifizierten Ausbildung der Arretiernocken 94 des zweiten Hebelarmes 32 des Feststellhebels 22 vorgesehen. Es ist dann eine Richtungsfixierung der Lenkrolle 2 ohne Radfeststellung möglich (Geradeauslauf).

**Ansprüche**

1. Laufrolle, insbesondere Lenkrolle (2), im wesentlichen bestehend aus einem gabelförmigen Rollengehäuse (4) mit einer Gabelbrücke (6) und zwei Gabelarmen (8), einem zwischen den Gabelarmen (8) drehbeweglich gelagerten Laufrad (12), insbesondere einem in der Gabelbrücke (6) apparateanschlußseitig gelagerten Drehkranz (16) sowie einer an dem Rollengehäuse (4) gelagerten Feststelleinrichtung (20) mit einem beweglich gelagerten, federbelasteten, etwa tangential zum Umfang des Laufrades (12) angeordneten Feststellhebel (22) und einem beweglich gelagerten, federbelasteten, mit dem Feststellhebel (22) arretierend zusammenwirkenden Lösehebel (24), wobei der Feststellhebel (22) vorzugsweise durch Fußbetätigung aus einer Losstellung in eine arretierte Feststellung bewegbar ist, in der er mit einem gegen das Laufrad (12) bewegbaren, ein gegen dessen Lauffläche wirkendes Feststellelement (26) aufweisenden, ersten Hebelarm (28) das Laufrad (12) sowie insbesondere mit einem gegen den Drehkranz (16) bewegbaren, mit einer Verzahnung (30) des Drehkranzes (16) zusammenwirkenden, zweiten Hebelarm (32) auch den Drehkranz (16) feststellt und wobei der Feststellhebel (22) bei Betätigung des Lösehebels (24) durch Aufhebung seiner Arretierung aufgrund seiner Federbelastung wieder zurück in die Losstellung bewegbar ist, **dadurch gekennzeichnet, daß** der Feststellhebel (22) ein derart kraft- und/oder formschlüssig mit dem Lösehebel (24) sowie mit einer ein Widerlager bildenden Gehäusewandung (36) zusammenwirkendes Arretierelement (48) aufweist, daß er im wesentlichen in jeder Stellung über seinen Hebelweg hinweg arretierbar ist.

2. Laufrolle nach Anspruch 1, **dadurch gekennzeichnet, daß** der Lösehebel (24) etwa parallel zu dem Feststellhebel (22) zwischen diesem und der Gehäusewandung (36) verläuft, daß der erste Hebelarm (28) des Feststellhebels (22) das sich etwa senkrecht zu diesem sowie zu dem Lösehebel (24) von dem Laufrad (12) weg erstreckende, durch eine Gehäuseöffnung (46) der Gehäusewandung (36) geführte Arretierelement (48) aufweist, und daß der Kraft- und/oder Formschluß einerseits zwischen dem Arretierelement (48) und einem Öffnungsrand (60) der Gehäuseöffnung (46) und andererseits zwischen dem Arretierelement (48) und mindestens einer Anlagekante (62) des Lösehebels (24) gegeben ist, wobei der Lösehebel (24) derart schwenkbeweglich gelagert ist, daß sich bei seiner Betätigungsbewegung die Anlagekante (62) den Kraft- und/oder Formschluß aufhebend von dem Arretierelement (48) weg bewegt.

3. Laufrolle nach Anspruch 1 oder 2, **dadurch gekennzeichnet, daß** der Feststellhebel (22) als einteiliges Blattfeder-Stanzteil (65 ; 132) ausgebildet ist.

4. Laufrolle nach einem oder mehreren der Ansprüche 1 bis 3, **dadurch gekennzeichnet, daß** der Lösehebel (24) als einteiliges Blattfeder-Stanzteil (110 ; 124) oder als formstabiles Blechteil (210) ausgebildet ist.

5. Laufrolle nach Anspruch 1 oder 2, **dadurch gekennzeichnet, daß** der Feststellhebel (22) zweiteilig aus zwei lösbar miteinander verbundenen Federblech-Stanzteilen (216, 218) gebildet ist.

6. Laufrolle nach Anspruch 1 oder 2, **dadurch gekennzeichnet, daß** der Feststellhebel (22) und der Lösehebel (24) gemeinsam als einteiliges Blattfeder-Stanzteil (140) ausgebildet sind.

7. Laufrolle nach einem oder mehreren der Ansprüche 2 bis 6, **dadurch gekennzeichnet, daß** die Anlagekante (62) des Lösehebels (24) jeweils von einer freien Endkante mindestens einer widerhakenartig schräg etwa in Richtung des Übergangsbereiches zwischen dem Feststellhebel (22) und dem Arretierelement (48) abgebogenen Arretierzunge (122 ; 170) gebildet ist.

8. Laufrolle nach einem oder mehreren der Ansprüche 2 bis 7, **dadurch gekennzeichnet, daß** das Arretierelement (48) auf seiner der Anlagekante (62) des Lösehebels (24) zugekehrten Seite eine Kerbverzahnung (192) aufweist, in die die Anlagekante (62) des Lösehebels (24) form- oder kraftschlüssig eingreift.

9. Laufrolle nach einem oder mehreren der Ansprüche 3 bis 8, **dadurch gekennzeichnet, daß** das den Feststellhebel (22) bildende Blattfeder-Stanzteil (65, 132) etwa in seinem mittigen Bereich eine freigeschnittene oder freigesparte, gehäuseseitig befestigte Befestigungszunge (80) aufweist.

10. Laufrolle nach einem oder mehreren der Ansprüche 1 bis 9, **dadurch gekennzeichnet, daß** der Lösehebel (24) und der Feststellhebel (22) gehäuseseitig über mindestens ein gemeinsames Befestigungselement, insbesondere eine Nietverbindung (134,.190), befestigt sind.

11. Laufrolle nach einem oder mehreren der Ansprüche 1 bis 9, **dadurch gekennzeichnet, daß** der Lösehebel (24) und der Feststellhebel (22) gehäuseseitig jeweils über mindestens ein eigenes Befestigungselement, insbesondere über jeweils mindestens eine Nietverbindung (84, 125), befestigt sind.

12. Laufrolle nach einem oder mehreren der Ansprüche 1 bis 9, **dadurch gekennzeichnet, daß** der Lösehebel (24) frei beweglich zwischen der Gehäusewandung (36) und dem insbesondere über eine Nietverbindung (190) befestigten Feststellhebel (22) gelagert ist, wobei der Lösehebel (24) sich vorzugsweise einerseits mit einer abgekröpften Lagerzunge (212) an der Gehäusewandung (36) und andererseits an einer Federzunge (154) des Feststellhebels (22) abstützt.

13. Laufrolle nach einem oder mehreren der Ansprüche 1 bis 12, **dadurch gekennzeichnet, daß** der Feststellhebel (22) in Verlängerung des freien Endbereichs des zweiten Hebelarmes (32) mindestens einen, vorzugsweise zwei oder drei in Umfangsrichtung des Drehkranzes (16) beabstandete, in der Feststellung in die am Außenumfang einer Kugelhülse (93) des Drehkranzes (16) gebildete Verzahnung (30) eingreifende(n) Arretiernocken (94) aufweist.

14. Laufrolle nach einem oder mehreren der Ansprüche 1 bis 13, **dadurch gekennzeichnet, daß** der zweite Hebelarm (32) des Feststellhebels (22) in seiner den Drehkranz (16) arretierenden Feststellung an einem gehäuseseitigen Anschlag (194) anliegt.

15. Laufrolle nach einem oder mehreren der Ansprüche 3 bis 14, **dadurch gekennzeichnet, daß** das gegen das Laufrad (12) wirkende Feststellelement (26) aus vorzugsweise zwei freigeschnittenen oder freigesparten, schräg in Richtung des Laufrades (12) abgebogenen, in zu dem Laufrad tangentialer Richtung einander gegenüberliegenden Feststellzungen (102) des den Feststellhebel (22) bildenden Blattfeder-Stanzteils (65, 132, 218) oder aus einem am freien Ende einer den ersten Hebelarm (28) bildenden, freigeschnittenen oder freigesparten Federzunge (154) umgebogenen Steg (158) des Blattfeder-Stanzteils (140) besteht.

16. Laufrolle nach einem oder mehreren der Ansprüche 2 bis 15, **dadurch gekennzeichnet, daß** das Arretierelement (48) aus einem L-förmig gebogenen Blechstreifen besteht, wobei ein längerer L-Schenkel (50) endseitig mit dem ersten Hebelarm (28) des Feststellhebels (22) verbunden ist, sich durch eine Durchgangsöffnung (54) des Lösehebels (24) sowie die Gehäuseöffnung (46) hindurch erstreckt und in einen kürzeren, oberseitig eine Trittfläche (56) aufweisenden L-Schenkel (58) übergeht.

17. Laufrolle nach einem oder mehreren der Ansprüche 1 bis 16, **dadurch gekennzeichnet, daß** der Lösehebel (24) im Bereich seines freien Endes durch einen sich über den Feststellhebel (22) sowie das Arretierelement (48) hinaus erstreckenden Betätigungsabschnitt (123) verlängert ist, wobei in dem Betätigungsabschnitt (123) vorzugsweise ein kappenartiger Überzug (196) befestigt ist.

18. Laufrolle nach einem oder mehreren der Ansprüche 1 bis 17, **dadurch gekennzeichnet, daß** die Feststelleinrichtung (20) unmittelbar an dem Rollengehäuse (4) gelagert ist, wobei der Feststellhebel (22) und der Lösehebel (24) an dem Rollengehäuse (4) befestigt sind und die Gehäuseöffnung (46) in der Gabelbrücke (6) gebildet ist.

19. Laufrolle nach einem oder mehreren der Ansprüche 1 bis 17, **dadurch gekennzeichnet, daß** die Feststelleinrichtung (20) mittelbar über ein gesondertes Feststellergehäuse (34) an dem Rollengehäuse (4) gelagert ist, wobei der Feststellhebel (22) und der Lösehebel (24) an dem Feststellergehäuse (34) befestigt sind und die Gehäuseöffnung (46) in einer Gehäusewandung (36) des Feststellergehäuses (34) gebildet ist.

20. Laufrolle nach Anspruch 19, **dadurch gekennzeichnet, daß** das Feststellergehäuse (34) im wesentlichen U-förmig aus einer Stegwandung (36) und zwei Schenkelwandungen (38) gebildet ist, wobei das Feststellergehäuse (34) das Rollengehäuse (4) bereichsweise übergreift sowie mit einer aus der Stegwandung (36) freigeschnittenen oder freigesparten und aus der Ebene der Stegwandung (36) herausgebogenen, parallel zur Stegwandung (36) unterhalb von dieser angeordneten Haltezunge (40) und/oder mit parallel zu der Stegwandung (36) verlaufenden Abschnitten (190) des Blattfeder-Stanzteils (140) die Gabelbrücke (6) des Rollengehäuses (4) untergreift, und wobei sich mindestens ein Befestigungsbolzen (42) durch miteinander fluchtende Durchgangslöcher der jeweils an den Gabelarmen (8) anliegenden Schenkelwandungen (38) des Festellergehäuses (34) sowie der Gabelarme (8) erstreckt.

21. Laufrolle nach einem oder mehreren der Ansprüche 1 bis 20, **gekennzeichnet durch** eine akustische Signaleinrichtung, die bei Erreichen einer bestimmten, den Feststellhebel (22) beaufschlagenden Mindest-Feststellkraft ein akustisches Signal erzeugt.

## Claims

1. Castor, in particular steering roller (2), substantially comprising a fork-shaped roller housing (4) with a fork bridge (6) and two fork arms (8), a runner wheel (12) housed in a rotatably movable manner between the fork arms (8), in particular a rotating ring (16) housed in the fork bridge (6) on the side connected to the apparatus, and a locking device (20) housed on the roller housing (4) and having a movably housed, spring-loaded locking lever (22) arranged approximately at a tangent to the circumference of the runner wheel (12) and a movably housed, spring-loaded releasing lever (24) cooperating with the locking lever (22) in a stopping manner, where the locking lever (22) may be moved preferably by foot activation from a released position into a stopped locked position, in which it locks the runner wheel (12) by means of a first lever arm (28) which is movable towards the runner wheel (12) and has a locking element (26) acting in opposition to the running surface thereof, and also the rotating ring (16) in particular by means of a second lever arm (32) which is movable towards the rotating ring (16) and cooperates with a toothing (30) of the rotating ring (16), and where the locking lever (22), due to its spring loading, may be moved back into the released position again on operating the releasing lever (24) by removing its stop effect, characterised in that the locking lever (22) has a stopping element (48) cooperating with the releasing lever (24) and with a housing wall (36) forming an abutment in a non-positive and/or form-fit manner such that it may be stopped substantially at any position along its lever path.

2. Castor according to Claim 1, characterised in that the releasing lever (24) runs approximately parallel to the locking lever (22) between the lever arm and the housing wall (36), in that the first lever arm (28) of the locking lever (22) has the stopping element (48), extending away from the runner wheel (12) approximately vertically to the lever arm and to the releasing lever (24) and guided through a housing opening (46) of the housing wall (36), and in that there is the non-positive and/or form-fit connection on the one hand between the stopping element (48) and an opening rim (60) of the housing opening (46) and on the other hand between the stopping element (48) and at least one bearing edge (62) of the releasing lever (24), the releasing lever (24) being housed such that it may move in a swivelling manner so that during its activation movement the bearing edge (62) is moved away from the stopping element (48), removing the non-positive and/or form-fit connection.

3. Castor according to Claim 1 or 2, characterised in that the locking lever (22) is constructed as a single-component leaf spring punched part (65 ; 132).

4. Castor according to one or more of Claims 1 to 3, characterised in that the releasing lever (24) is constructed as a single-component leaf spring punched part (110 ; 124) or as a dimensionally stable sheet-metal part (210).

5. Castor according to Claim 1 or 2, characterised in that the locking lever (22) is formed in two parts from two resilient sheet-metal punched parts (216, 218) separably connected to one another.

6. Castor according to Claim 1 or 2, characterised in that the locking lever (22) and the releasing lever (24) are together constructed as a single-component leaf spring punched part (140).

7. Castor according to one or more of Claims 2 to 6, characterised in that the bearing edge (62) of the releasing lever (24) is formed respectively from a free end edge of at least one barb-type stop tongue (122; 170) bent at a slant approximately in the direction of the transition region between the locking lever (22) and the stopping element (48).

8. Castor according to one or more of Claims 2 to 7, characterised in that the stopping element (48) has on its side facing the bearing edge (62) of the releasing lever (24) a notched toothing (192) into which the bearing edge (62) of the releasing lever (24) engages in a form-fit or non-positive manner.

9. Castor according to one or more of Claims 3 to 8, characterised in that the leaf spring punched part (65, 132) forming the locking lever (22) has approximately in its middle region a free-cut or recessed securing tongue (80) secured on the housing side.

10. Castor according to one or more of Claims 1 to 9, characterised in that the releasing lever (24) and the locking lever (22) on the housing side are secured via at least one common securing element, in particular a riveted joint (134, 190).

11. Castor according to one or more of Claims 1 to 9, characterised in that the releasing lever (24) and the locking lever (22) on the housing side are secured respectively via at least one individual securing element, in particular respectively via at least one riveted joint (84, 125).

12. Castor according to one or more of Claims 1 to 9, characterised in that the releasing lever (24) is housed in a freely movable manner between the housing wall (36) and the locking lever (22), which is secured in particular via a riveted joint (190), the releasing lever (24) being supported preferably on the one hand by means of a bearing tongue (212), bent at right angles, against the housing wall (36) and on the other hand against a resilient tongue (154) of the locking lever (22).

13. Castor according to one or more of Claims 1 to 12, characterised in that the locking lever (22) has as an elongation of the free end region of the second lever arm (32) at least one, preferably two or three stop cams (94) spaced in the circumferential direction of the rotating ring and engaging in the locked position in the toothing (30) formed on the outer circumference of a spherical casing (93) of the rotating ring (16).

14. Castor according to one or more of Claims 1 to 13, characterised in that the second lever arm (32) of the locking lever (22), in its locked position stopping the rotating ring (16), bears against a stop (194) on the housing side.

15. Castor according to one or more of Claims 3 to 14, characterised in that the locking element (26) acting in opposition to the runner wheel (12) comprises preferably two free-cut or recessed locking tongues (102), which lie opposite one another in a direction at a tangent to the runner wheel and which are bent at a slant in the direction of the runner wheel (12), of the leaf spring punched part (65, 132, 218) forming the locking lever (22), or comprises a web (158) of the leaf spring punched part (140), bent round at the free end of a free-cut or recessed resilient tongue (154) forming the first lever arm (28).

16. Castor according to one or more of Claims 2 to 15, characterised in that the stopping element (48) comprises a sheet-metal strip bent in an L-shape, a longer leg (50) of the L being connected on the end side to the first lever arm (28) of the locking lever (22), extending through a passage opening (54) of the releasing lever (24) and the housing opening (46) and merging into a shorter leg (58) of the L having a tread surface (56) on the upper side.

17. Castor according to one or more of Claims 1 to 16, characterised in that the releasing lever (24) is elongated in the region of its free end by means of an activating section (123) extending via the locking lever (22) and the stopping element (48), a cap-type sleeve (196) preferably being secured in the activating section (123).

18. Castor according to one or more of Claims 1 to 17, characterised in that the locking device (20) is housed directly on the roller housing (4), the locking lever (22) and the releasing lever (24) being secured to the roller housing (4) and the housing opening (46) being formed in the fork bridge (6).

19. Castor according to one or more of Claims 1 to 17, characterised in that the locking device (20) is housed indirectly via a separate locker housing (34) on the roller housing (4), the locking lever (22) and the releasing lever (24) being secured to the locker housing (34) and the housing opening (46) being formed in a housing wall (36) of the locker housing (34).

20. Castor according to Claim 19, characterised in that the locker housing (34) is formed substantially in a U-shape from a web wall (36) and two flange walls (38), the locker housing (34) in certain regions lapping over the roller housing (4) and lapping under the fork bridge (6) of the roller housing (4) by means of a holding tongue (40) free-cut or recessed from the web wall (36) and bent out from the plane of the web wall (36), parallel to the web wall (36) and arranged under the latter and/or by means of sections (190) of the leaf spring punched part (140) running parallel to the web wall (36), and where at least one securing pin (42) extends through passage holes aligned with one another of the flange walls (38), bearing against the fork arms (8), of the locker housing (34) and of the fork arms (8).

21. Castor according to one or more of Claims 1 to 20, characterised by an acoustic signalling device which produces an acoustic signal when a certain minimum locking power acting upon the locking lever (22) is achieved.

## Revendications

1. Poulie de roulement, en particulier poulie de guidage (2), constituée essentiellement d'un boîtier de poulie (4) en forme de fourche comportant un corps de fourche (6) et deux bras de fourche (8), une roue (12) supportée de manière rotative entre les bras de fourche (8), en particulier une couronne rotative (16) montée dans le corps de fourche (6) du côté pouvant être raccordé aux engins, ainsi qu'un dispositif de blocage (20) fixé sur le boîtier de poulie (4) et comportant un levier de blocage (22) disposé sensiblement tangentiellement sur le pourtour de la roue (12), monté de manière mobile et sollicité élastiquement, ainsi qu'un levier de déblocage (24) monté de manière mobile et sollicité élastiquement qui coopère avec le levier de blocage (22), ledit levier de blocage (22) pouvant être actionné de préférence au pied pour passer d'une position de roue libre dans une position d'immobilisation bloquée, dans laquelle il bloque la roue (12) au moyen d'un premier bras de levier (28) mobile en direction de ladite roue (12) et présentant un élément de blocage (26) agissant contre la surface de roulement de cette roue, et dans laquelle il bloque aussi la couronne rotative, en particulier au moyen d'un deuxième bras de levier (32) mobile en direction de la couronne rotative (16) et coopérant avec une denture (30) de ladite couronne (16), ledit levier de blocage (22) pouvant être déplacé pour revenir dans la position de roue libre lors de la manoeuvre du levier de déblocage (24) par la suppression de son blocage due à sa sollicitation élastique caractérisée par le fait que le levier de blocage (22) présente un élément de blocage (48) lié mécaniquement et/ou géométriquement au levier de déblocage (24) et coopérant avec une paroi (36) du boîtier formant contre-butée, de telle sorte qu'il peut être bloqué pratiquement en tous les points de son parcours.

2. Poulie de roulement selon la revendication 1, caractérisée par le fait que le levier de déblocage (24) s'étend sensiblement parrallèlement au levier de blocage (22) entre celui-ci et la paroi (36) du boîtier, que le premier bras de levier (28) du levier de blocage (22) présente l'élément de blocage (48) s'étendant sensiblement perpendiculairement audit bras de levier (28) ainsi qu'audit levier de déblocage (24) à partir de la roue (12) et passant par une ouverture (46) de la paroi (36) du boîtier, et que la liaison mécanique et/ou géométrique est assurée d'une part entre l'élément de blocage (48) et un bord d'ouverture (60) de l'ouverture du boîtier et d'autre part entre l'élément de blocage (48) et au moins une arête d'appui (62) du levier de déblocage (24), ledit levier de déblocage (24) étant monté de manière oscillante de telle sorte que lors de sa manoeuvre l'arête d'appui (62) s'éloigne de l'élément de blocage (48) en supprimant la liaison mécanique et/ou géométrique.

3. Poulie de roulement selon la revendication 1 ou 2, caractérisée par le fait que le levier de blocage (22) est réalisé sous le forme d'un ressort à lame d'une seule pièce (65, 132) obtenu par découpage.

4. Poulie de roulement selon l'une ou plusieurs des revendications 1 à 3, caractérisée par le fait que le levier de déblocage (24) est réalisé sous le forme d'un ressort à lame d'une seule pièce (110, 124) obtenu par découpage, ou sous la forme d'une pièce de tôle (210) de forme stable.

5. Poulie de roulement selon la revendication 1 ou 2, caractérisée par le fait que le levier de blocage (22) est réalisée en deux parties par deux pièces découpées en tôle élastique assemblées de manière à pouvoir être détachées (216, 218).

6. Poulie de roulement selon la revendication 1 ou 2, caractérisée par le fait que le levier de blocage (22) et le levier de déblocage (24) sont réalisés ensemble sous la forme d'un ressort à lame d'une seule pièce (140) obtenu par découpage.

7. Poulie de roulement selon l'une ou plusieurs des revendications 2 à 6, caractérisée par le fait que l'arête d'appui (62) du levier de déblocage (24) est formée respectivement par une arête d'extrémité libre d'au moins une languette (122, 170) en forme de conre-crochet repliée obliquement sensiblement en direction de la zone de transition entre le levier de blocage (22) et l'élément de blocage (48).

8. Poulie de roulement selon l'une ou plusieurs des revendications 2 à 7, caractérisée par le fait que l'élément de blocage (48) présente sur son côté orienté vers l'arête d'appui (62) du levier de déblocage (24) une denture (192) dans laquelle s'engrène en liaison géométrique ou mécanique l'arête d'appui (62) du levier de déblocage (24).

9. Poulie de roulement selon l'une ou plusieurs des revendications 3 à 8, caractérisée par le fait que le ressort à lame (65, 132) constituant le levier de blocage (22) présente dans sa zone centrale une languette de fixation (80) ménagée ou découpée et fixée du côté du boîtier.

10. Poulie de roulement selon l'une ou plusieurs des revendications 1 à 9, caractérisée par le fait que le levier de déblocage (24) et le levier de blocage (22) sont fixés sur le côté du boîtier par au moins un élément de fixation commmun, notamment un rivetage (134, 190).

11. Poulie de roulement selon l'une ou plusieurs des revendications 1 à 9, caractérisée par le fait que le levier de déblocage (24) et le levier de blocage (22) sont fixés sur le côté du boîtier respectivement par au moins un élément de fixation propre, en particulier par au moins un rivetage (84, 125).

12. Poulie de roulement selon l'une ou plusieurs des revendications 1 à 9, caractérisée par le fait que le levier de déblocage est supporté de manière librement mobile entre la paroi (36) du boîtier et le levier de blocage (22) fixé par un rivetage (190), ledit levier de déblocage (24) s'appuyant de préférence d'une part sur la paroi (36) du boîtier au moyen d'une languette d'appui coudée (212), et d'autre part sur une languette élastique (154) du levier de blocage (22).

13. Poulie de roulement selon l'une ou plusieurs des revendications 1 à 12, caractérisée par le fait que le levier de blocage (22) dans le prolongement de la zone d'extrémité libre du deuxième bras de levier (32) présente au moins une, mais de préférence deux ou trois cames d'arrêt (94) placées à une certaine distance en direction périphérique de la couronne rotative (16) et s'engrénant, en position bloquée, dans la denture (13) constituée sur le pourtour extérieur d'une douille sphérique (93) de la couronne (16).

14. Poulie de roulement selon l'une ou plusieurs des revendications 1 à 13, caractérisée par le fait que le deuxième bras (32) du levier de blocage (22) s'applique contre une butée (194) sur le côté du boîtier dans sa position de blocage arrêtant la couronne (16).

15. Poulie de roulement selon l'une ou plusieurs des revendications 3 à 14, caractérisée par le fait que l'élément de blocage (26) agissant sur la roue (12) est constitué de préférence de deux languettes de blocage ménagées ou découpées, repliées obliquement en direction de la roue (12) tangentiellement à ladite roue (12) et se faisant face mutuellement, lesdites languettes faisant partie du ressort à lame (65, 132, 218) constituant le levier de blocage (22) ou étant constituées d'une barrette (158) du ressort à lame (140) repliée sur l'extrémité libre d'une languette élastique (154) ménagée ou découpée et constituant le premier bras de levier (28).

16. Poulie de roulement selon l'une ou plusieurs des revendications 2 à 15, caractérisée par le fait que l'élément de blocage (48) est constitué d'une bande de tôle repliée en forme de L, une branche plus longue du L (50) étant reliée du côté d'extrémité au premier bras de levier (28) du levier de blocage (22) s'étendant à travers une ouverture passante (54) du levier de déblocage (24) ainsi qu'à travers l'ouverture (46) du boîtier et se prolongeant en une branche plus courte (58) du L présentant sur son côté supérieur une surface accessible par le pied de l'opérateur.

17. Poulie de roulement selon l'une ou plusieurs des revendications 1 à 16, caractérisée par le fait que le levier de déblocage (24) est prolongé dans la zone de son extrémité libre par une section de manoeuvre (123) s'étendant au-delà du levier de blocage (22) ainsi qu'au delà de l'élément de blocage (48), dans cette section de manoeuvre (123) étant fixé de préférence une enveloppe (196) en forme de capuchon.

18. Poulie de roulement selon l'une ou plusieurs des revendications 1 à 17, caractérisée par le fait que le dispositif de blocage (20) est monté directement sur le boîtier de poulie (4), le levier de blocage (22) et le levier de déblocage (24) étant fixés sur ledit boîtier (4) et l'ouverture (46) du boîtier étant réalisée dans le corps (6) de la fourche.

19. Poulie de roulement selon l'une ou plusieurs des revendications 1 à 17, caractérisée par le fait que le dispositif de blocage (20) est monté sur le boîtier (4) de la poulie par l'intermédiaire d'un boîtier séparé (34), le levier de blocage (22) et le levier de déblocage (24) étant fixés sur le boîtier (34) et l'ouverture (46) du boîtier étant réalisée dans une paroi (36) du boîtier (34).

20. Poulie de roulement selon la revendication 19, caractérisée par le fait que le boîtier (34) des éléments de blocage est en forme de U et formé d'une paroi (36) constituant le fond du U et de deux parois (38) constituant les bras du U, ledit boîtier (34) dépassant par endroits du boîtier (4) de la poulie et saisissant celui-ci par en-dessous au moyen d'une languette (40) disposée parallèlement ou sous la paroi (36), ménagée ou découpée dans cette paroi (36) et repliée pour sortir de son plan, et/ou par des sections (190) du ressort à lame (140) parallèles à la paroi (36), et au moins un boulon de fixation (42) s'étendant à travers des trous de passage alignés mutuellement, pratiqués respectivement dans les parois (38) s'appliquant sur les bras de la fourche (8), dans le boîtier (34) ainsi que dans les bras de la fourche (8).

21. Poulie de roulement selon l'une ou plusieurs des revendications 1 à 20, caractérisée par un dispositif de signalisation acoustique qui génère un signal acoustique lorsqu'une certaine force de blocage minimale appliquée sur le levier de blocage (22) est atteinte.

FIG.1

FIG.2

FIG.3

FIG.4

FIG.5

FIG.6

FIG.7

FIG.8

EP 0 370 505 B1

FIG.9

FIG.10

FIG.11

19

FIG. 12

FIG. 13

FIG. 14

FIG. 15

FIG. 16

FIG.18

FIG.17

FIG. 19

FIG.20